# FASCICULE DE BREVET EUROPEEN

(11) **EP 0 984 184 B1**
(45) Date de publication et mention de la délivrance du brevet: **29.09.2004**
(21) Numéro de dépôt: 99402165.7
(22) Date de dépôt: 01.09.1999
(51) Int. Cl.: F16D 13/70, F16D 3/77

(54) **Dispositif d'amortissement des débattements d'un volant flexible pour moteur à combustion interne**
Dämpfungsvorrichtung für ein elastisches Schwungrad eines Verbrennungsmotores
Damping device for a flexible flywheel of an internal combustion engine

(30) Priorité: 02.09.1998 FR 9810970
(43) Date de publication de la demande: 08.03.2000
(73) Titulaire: AUTOMOBILES PEUGEOT, 75116 Paris (FR); AUTOMOBILES CITROEN, 92200 Neuilly-sur-Seine (FR)
(72) Inventeur: Thomas, Olivier, 92500 Rueil Malmaison (FR)
(74) Mandataire: Gendraud, Pierre

(56) Documents cités:
- EP-A- 0 385 752
- EP-A- 0 717 211
- EP-A- 0 789 153
- DE-A- 4 142 124
- DE-A- 4 402 257
- DE-A- 19 624 746
- FR-A- 446 977
- US-A- 5 323 665
- PATENT ABSTRACTS OF JAPAN vol. 18, no. 550 (M-1690), 20 octobre 1994 (1994-10-20) & JP 06 193683 A (MITSUBISHI), 15 juillet 1994 (1994-07-15)

## Description

La présente invention concerne un dispositif d'amortissement des débattements d'un volant flexible pour moteur à combustion interne.

Elle se rapporte plus particulièrement à un dispositif d'amortissement des débattements d'un ensemble de transmission de puissance pour transmettre le couple du moteur à une unité menée comprenant, de manière connue, un vilebrequin, un élément élastique présentant une partie centrale fixée à une extrémité du vilebrequin et un volant présentant une partie périphérique externe fixée à une partie périphérique externe de l'élément élastique de façon que le couple du moteur soit transmis du vilebrequin au volant à travers ledit élément élastique.

On a noté qu'un vilebrequin équipé d'un volant d'inertie rigide classique présente des modes de flexion dont les fréquences sont placées juste au-dessus de la limite supérieure de la plage de fonctionnement du moteur. Les fréquences de ces modes sont directement liées à la rigidité du vilebrequin, et donc en grande partie à sa masse.

Il apparaît que les limites des dimensionnements, donc de l'allégement, sont essentiellement dues à ces critères de fréquences des modes de déformation, au moins pour les moteurs à aspiration naturelle.

On connaît notamment par le brevet européen EP-B-0 385 752, un volant d'inertie désigné également volant flexible qui permet de découpler en flexion le volant du vilebrequin permettant ainsi à même dimensionnement de vilebrequin, de remonter de façon significative les fréquences des modes propres de flexion du vilebrequin. De sorte qu'il est possible d'alléger le vilebrequin, la rigidité nécessaire étant moindre pour obtenir des modes de flexion à fréquences suffisamment élevées.

Toutefois, ce type de volant présente l'inconvénient de générer des modes de flexion et de pompage de volant dont les fréquences naturelles sont relativement basses. En particulier avec les inerties de volant et la caractéristique de l'élément élastique de l'ordre de 600 à 2200 Kg/mm, les modes propres de flexion du volant moteur sont caractérisés par des fréquences de l'ordre de 50 à 200 Hz. De telles fréquences sont excitables par le moteur dans sa plage de fonctionnement de sorte qu'à des régimes particuliers apparaissent d'importants déplacements de l'ordre de 0,5 mm à 1 mm du volant moteur, et donc de la face d'embrayage. De tels déplacements sont voisins de la levée du plateau d'embrayage ce qui engendre une détérioration de la qualité du débrayage, de la durée de vie de la friction ainsi que de l'agrément de conduite.

Le but de l'invention est de remédier aux inconvénients mentionnés ci-dessus.

A cet effet, la présente invention a pour objet un dispositif d'amortissement des débattements d'un ensemble de transmission de puissance pour transmettre le couple du moteur à une unité menée comprenant, de manière connue, un vilebrequin, un élément de transmission élastique du couple présentant une partie centrale fixée à une extrémité du vilebrequin et un volant présentant une partie périphérique externe fixée à une partie périphérique externe de l'élément élastique de façon que le couple du moteur soit transmis du vilebrequin au volant à travers ledit élément de transmission, caractérisé en ce que cet élément de transmission de couple est constitué de deux flasques flexibles, de profils sensiblement identiques, et en ce que ces deux flasques ont d'une part une partie périphérique intérieure respectivement entourant ladite extrémité constituée par un épaulement et montée fixement sur ce dernier par une pluralité de boulons, une pièce de renfort étant interposée entre la partie périphérique intérieure et les boulons, cette pièce de renfort étant pourvue d'une partie périphérique extérieure qui est logée dans un orifice réalisé dans le volant d'inertie, et d'autre part une partie périphérique extérieure montée fixement sur le volant d'inertie par une pluralité de boulons.

Suivant quelques dispositions intéressantes de l'invention:
- une pièce est interposée entre la pièce de renfort et les boulons et en ce que cette pièce est montée fixement sur l'extrémité du vilebrequin et est pourvue de zones de contact glissant sur un fond d'un alésage du volant d'inertie;
- la pièce présente la forme générale d'un cercle qui est pourvu sur sa périphérie d'une pluralité d'encoches de manière à délimiter de façon régulière des languettes destinées à être précontraint sur le fond;
- de manière préférentielle, cette pièce est pourvue de 36 languettes;
- chacune des languettes à une raideur axiale de l'ordre de 25 à 250 N/mm;
- chacune des languettes est précontraint sur le fond de l'alésage du volant avec une force de l'ordre de 25 à 250 N.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une section transversale longitudinale d'un ensemble de vilebrequin pour un moteur à combustion interne selon un premier mode de réalisation de la présente invention;

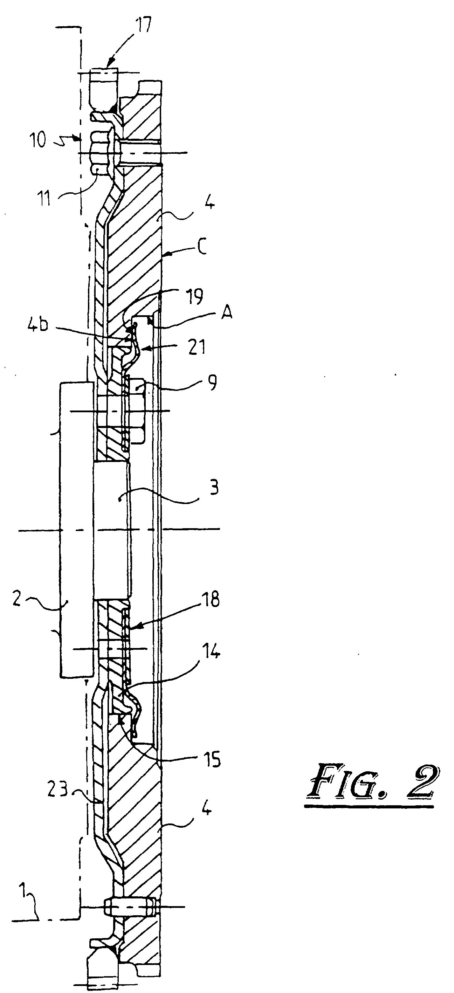

- la figure 2 est vue similaire à la figure 1 selon un second mode de réalisation de l'invention;
- la figure 3 est une vue de face d'un anneau élastique;
- la figure 4 est une vue en coupe suivant la ligne IV-IV de la figure 3.

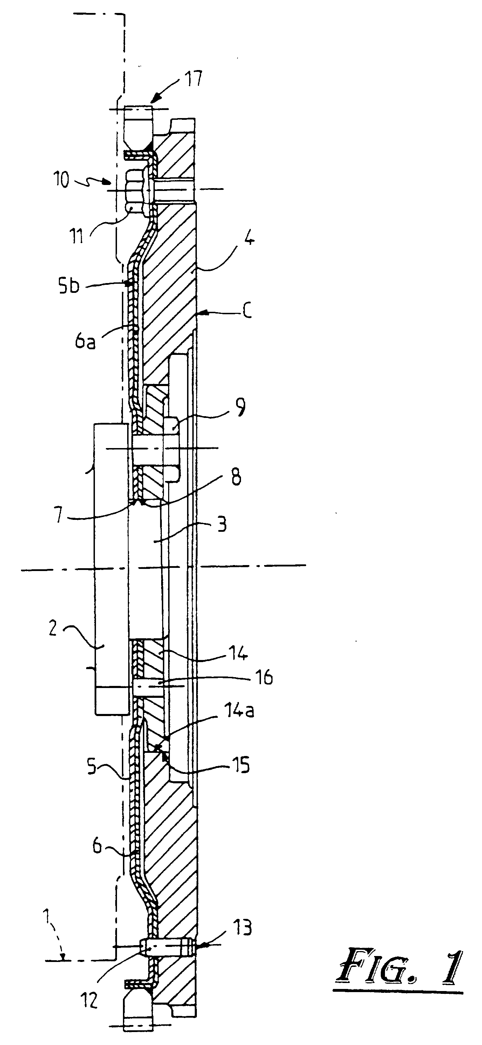

On a représenté à la figure 1, une partie d'une transmission automobile destinée à transmettre un couple délivré par le moteur comprenant, un moteur 1 muni de manière classique d'un vilebrequin 2. Le vilebrequin 2 est pourvu à l'une de ses extrémités d'un épaulement annulaire 3.

Le couple est transmis du vilebrequin 2 à un volant d'inertie annulaire 4 au moyen d'un élément de transmission de couple. De manière classique, un embrayage, non représenté, présentant, un disque d'embrayage est disposé au voisinage du volant d'inertie de manière que celui-ci puisse être mis en prise de friction avec ledit volant d'inertie à la surface travaillante C désignée également glace d'embrayage.

Selon un premier mode de réalisation de la présente invention, cet élément de transmission de couple est constitué de deux flasques flexibles 5 et 6, de profils sensiblement identiques. Ces deux flasques 5 et 6 ont d'une part une partie périphérique intérieure respectivement 7 et 8 entourant l'épaulement 3 et montée fixement sur ce dernier par une pluralité de boulons 9 et d'autre part une partie périphérique extérieure 10 montée fixement sur le volant d'inertie 4 par une pluralité de boulons 11.

Une pièce de renforcement 14 est interposée entre la partie périphérique intérieure de l'élément de transmission et les boulons 9. Cette pièce de renforcement à une partie périphérique extérieure 14a qui est logée dans un orifice 15 réalisé dans le volant d'inertie 4. Une goupille 16 traverse cette pièce de renforcement 14 ainsi que les deux flasques 5 et 6 afin d'assurer le centrage de ladite pièce.

Le centrage des flasques 5 et 6 par rapport au volant d'inertie 4 est réalisé par une goupille de serrage 12 traversant chacun des flasques 5 et 6 et engagée dans un orifice 13 du volant d'inertie 4.

Les deux flasques 5 et 6 présentent des zones de contact faces 5b et 6a, comme visible sur la figure 1, qui sous l'effet de la déformation du volant 4 en flexion ou en pompage se déplacent. Ces zones de contact 5b, 6a génèrent des frottement qui limitent en conséquence l'amplitude de débattement du volant d'inertie 4.

On notera que de manière à limiter au maximum le débattement du volant, c'est-à-dire le débattement de la masse d'inertie, les zones de contact à privilégier sont les zones situées sur le rayon le plus grand possible, car présentant la surface de contact la plus grande et le débattement le plus important. Les efforts de frottement seront ainsi les plus importants.

De façon à pérenniser un tel dispositif, les surfaces en contact de chaque flasque 5 et 6 présentant un déplacement relatif l'une par rapport à l'autre sont traitées, notamment par exemple par phosphatation, pour garantir l'absence de fretting-corrosion ou de grippage susceptible de détériorer le comportement dynamique de ce volant 4.

Les flasques 5 et 6 sont réalisés en emboutissant séparément chacun de ces flasques et en réalisant l'assemblage avec la masse d'inertie.

Selon une variante de fabrication, les deux flasques 5 et 6 sont emboutis ensemble assurant ainsi une meilleure robustesse et évitant des éventuelles dérives de la forme obtenue après emboutissage.

Une couronne dentée 17 est fixement montée sur l'un des flasques 6 notamment par soudure, de manière à être mis en prise avec un pignon d'un démarreur, non représenté, pour transmettre la puissance d'entraînement du démarreur au vilebrequin lors du démarrage du moteur.

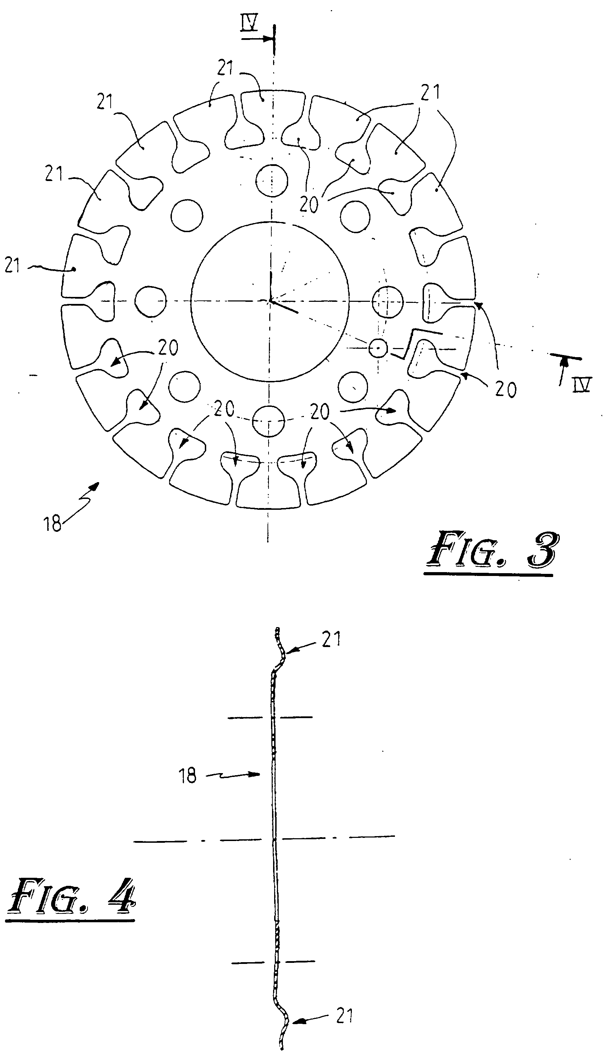

On a représenté à la figure 3, un second mode de réalisation de la présente invention. Dans ce mode, une pièce supplémentaire 18 est interposée entre la pièce de renfort 16 et les boulons 9.

Cette pièce 18 est montée fixement sur l'épaulement du vilebrequin et est pourvue de zones de contact 19 glissant sur le fond 4b d'un alésage A réalisé au centre du volant d'inertie 4.

On a représenté aux figures 3 et 4, une vue à plus grande échelle de cette pièce 18 qui présente la forme générale d'un cercle qui est pourvu sur sa périphérie d'une pluralité d'encoches 20 de manière à délimiter de façon régulière des languettes 21. Chacune de ces languettes 21 présente une flexibilité axiale et est destinée à être monter précontrainte sur la face extérieure du volant d'inertie 4. On notera que cette pièce 18 est avantageusement montée sur le volant d'inertie avec une précontrainte de l'ordre de 900 à 9000 N et présente une raideur axiale de l'ordre de 900 à 9000 N/mm.

Dans notre mode de réalisation, cette pièce 18 est munie de 36 languettes 21 de raideur axiale de l'ordre de 25 à 250 N/mm, chacune de ces languettes étant ainsi précontrainte de 25 à 250 N sur la face extérieure du volant d'inertie 4.

Par l'intermédiaire de cette pièce 18 et des flasques 5 et 6 on obtient un amortissement important des débattements du volant d'inertie 4 qui est généré par un frottement solide.

On comprend également qu'il est possible de garder un élément de transmission dit classique constitué d'un unique flasque, comme représenté sur la figure 3, et de monter une pièce 18 afin d'amortir les débattements du volant d'inertie.

Avantageusement, les dispositifs d'amortissements des débattements du volant d'inertie décrit ci-dessus permettent une réduction importante de l'amplitude de débattement du volant par rapport aux dispositifs classiques, de manière à obtenir un meilleur fonctionnement de l'embrayage.

Ce dispositif d'amortissement selon la présente invention permet également d'éviter tout phénomène résiduel de la boîte de vitesses lors de la phase de débrayage, quel que soit le régime du moteur. En effet, un débattement trop important du volant moteur conduit à un léchage parasite de la friction de l'embrayage.

Bien que l'invention ait été décrite en liaison avec différents modes de réalisation particulier, elle comprend tous les moyens techniques compris dans l'étendue de la protection définie par les revendications.

## Revendications

1. Dispositif d'amortissement des débattements d'un ensemble de transmission de puissance pour transmettre le couple du moteur à une unité menée comprenant un vilebrequin, un élément de transmission élastique du couple présentant une partie centrale fixée à une extrémité (3) du vilebrequin (2) et un volant (4) présentant une partie périphérique externe fixée à une partie périphérique externe de l'élément élastique de façon que le couple du moteur soit transmis du vilebrequin au volant à travers ledit élément de transmission, **caractérisé en ce que** cet élément de transmission de couple est constitué de deux flasques flexibles (5 et 6), de profils sensiblement identiques, et **en ce que** ces deux flasques (5 et 6) ont d'une part une partie périphérique intérieure respectivement (7 et 8) entourant ladite extrémité constituée par un épaulement (3) et montée fixement sur ce dernier par une pluralité de boulons (9), une pièce de renfort (14) étant interposée entre la partie périphérique intérieure et les boulons (9), cette pièce de renfort (14) étant pourvue d'une partie périphérique extérieure (14a) qui est logée dans un orifice (15) réalisé dans le volant d'inertie (4), et d'autre part une partie périphérique extérieure (10) montée fixement sur le volant d'inertie (4) par une pluralité de boulons (11).

2. Dispositif selon la revendication 1, **caractérisé en ce qu'**une pièce (18) est interposée entre la pièce de renfort (14) et les boulons (9) et **en ce que** cette pièce (18) est montée fixement sur l'extrémité du vilebrequin et est pourvue de zones de contact (19) glissant sur un fond (4b) d'un alésage (A) du volant d'inertie (4).

3. Dispositif d'amortissement des débattements d'un ensemble de transmission de puissance pour transmettre le couple du moteur à une unité menée comprenant un vilebrequin, un élément de transmission élastique du couple présentant une partie centrale fixée à une extrémité (3) du vilebrequin (2) et un volant (4) présentant une partie périphérique externe fixée à une partie périphérique externe de l'élément élastique de façon que le couple du moteur soit transmis du vilebrequin au volant à travers ledit élément de transmission, **caractérisé en ce qu'**une pièce (18) est interposée entre une pièce de renfort (14) montée fixement à l'extrémité du vilebrequin enserrant ainsi l'élément de transmission élastique (23) et les boulons (9) et **en ce que** cette pièce (18) est montée fixement sur l'extrémité du vilebrequin et est pourvue de zones de contact (19) glissant sur un fond (4b) d'un alésage (A) du volant d'inertie (4) réalisé sur la face extérieure (C) de celui-ci correspondant à la glace d'embrayage.

4. Dispositif selon la revendication 2 ou 3, **caractérisé en ce que** la pièce (18) présente la forme générale d'un cercle qui est pourvu sur sa périphérie d'une pluralité d'encoches (20) de manière à délimiter de façon régulière des languettes (21) destinées à être précontraint sur le fond (4b).

5. Dispositif selon la revendication 4, **caractérisé en ce que** chacune des languettes (21) à une raideur axiale de l'ordre de 25 à 250 N/mm.

6. Dispositif selon la revendication 4 ou 5, **caractérisé en ce que** chacune des languettes (21) est précontrainte sur le fond (4b) de l'alésage (A) du volant (4) avec une force de l'ordre de 25 à 250 N.

## Patentansprüche

1. Dämpfungsvorrichtung für eine Leistungsübertragungswelle zur Übertragung des Drehmoments des Motors an eine angetriebene Einheit, die eine Kurbelwelle aufweist sowie ein elastisches Drehmomentübertragungselement mit einem mittleren Bereich, der an einem Ende (3) der Kurbelwelle (2) befestigt ist und mit einer Schwungscheibe (4), die einen äußeren peripheren Bereich aufweist, der an einem äußeren peripheren Bereich des elastischen Elements derart befestigt ist, dass das Drehmoment des Motors von der Kurbelwelle über das Übertragungselement auf die Schwungscheibe übertragen wird, **dadurch gekennzeichnet, dass** dieses Drehmomentübertragungselement aus zwei flexiblen Scheiben (5 und 6) mit in etwa identischem Profil besteht und dadurch, dass die beiden Scheiben (5 und 6) einerseits einen jeweiligen inneren peripheren Bereich (7 und 8) aufweisen, der das Ende umgibt, welches von einer Schulter (3) gebildet wird und fest an letzterem über eine Mehrzahl von Schrauben (9) befestigt ist, wobei ein Verstärkungsteil (14) zwischen dem inneren peripheren Bereich und den Schrauben (9) angeordnet ist, wobei dieses Befestigungsteil (14) mit einem äußeren peripheren Bereich ( 14a) versehen ist, der in einer Öffnung (15) gelagert ist, welche in der Schwungscheibe (4) eingearbeitet ist, und wobei andererseits ein äußerer peripherer Bereich (10) fest auf der Schwungscheibe (4) mittels einer Mehrzahl von Schrauben (11) befestigt ist.

2. Dämpfungsvorrichtung nach Anspruch 1, **dadurch gekennzeichnet, dass** ein Teil (18) zwischen das Verstärkungsteil (14) und die Schrauben (9) angeordnet ist und dadurch, dass dieses Teil (18) am Ende der Kurbelwelle fest montiert ist und mit Kontaktbereichen (19) versehen ist, die auf dem Boden (4b) einer Bohrung (A) des Schwungrads (4) gleiten.

3. Dämpfungsvorrichtung für eine Leistungsübertragungsanordnung zur Übertragung des Drehmoments eines Motors an eine angetriebene Einheit, die eine Kurbelwelle aufweist sowie ein elastisches Drehmomentübertragungsmoment, welches einen mittleren Bereich aufweist, der an einem Ende (3) der Kurbelwelle (2) befestigt ist und eine Schwungscheibe (4) mit einem äußeren peripheren Bereich, welcher an einem äußeren peripheren Bereich des elastischen Elements so befestigt ist, dass das Drehmoment des Motors von der Kurbelwelle auf die Schwungscheibe über dieses Übertragungselement übertragen wird, **dadurch gekennzeichnet, dass** ein Teil (18) zwischen einem Verstärkungsteil (14), welches fest an einem Ende der Kurbelwelle angeordnet ist und somit das elastische Übertragungselement (23) umspannt und den Schrauben (9) angeordnet ist und dadurch, dass dieses Teil (18) fest an dem Ende der Kurbelwelle montiert ist und mit Kontaktbereichen (19) versehen ist, die auf dem Boden (4b) einer Bohrung (A) der Schwungscheibe (4) gleitet, welcher auf seiner Außenseite (C) ausgebildet ist, die der Kupplungsscheibe entspricht.

4. Dämpfungsvorrichtung nach den Ansprüchen 2 oder 3, **dadurch gekennzeichnet, dass** das Teil (18) im Wesentlichen die Form eines Kreises einnimmt, der auf seinem Umfang mit einer Mehrzahl von Einkerbungen (20) versehen ist, derart, dass diese regelmäßige Zungen (21) umgrenzen, die dazu bestimmt sind, auf dem Boden (4b) vorgespannt zu werden.

5. Dämpfungsvorrichtung nach Anspruch 4, **dadurch gekennzeichnet, dass** jede dieser Zungen (21) eine axiale Steifigkeit der Größenordnung 25 bis 250 N/mm aufweist.

6. Dämpfungsvorrichtung nach den Ansprüchen 4 oder 5, **dadurch gekennzeichnet, dass** jede dieser Zungen (21) auf dem Boden (4b) der Bohrung (A) der Schwungscheibe (4) mit einer Kraft der Größenordnung zwischen 25 und 250 N vorgespannt ist.

## Claims

1. Device for damping the travel of a power transmission assembly in order to transmit the engine torque to a driven unit comprising a crankshaft, an elastic torque transmission member having a central part fixed to one end (3) of the crankshaft (2) and a flywheel (4) having an outer peripheral part fixed to an outer peripheral part of the elastic member so that the engine torque is transmitted from the crankshaft to the flywheel through said transmission member, **characterised in that** this torque transmission member is constituted by two flexible flanges (5 and 6), substantially identical in profile, and **in that** these two flanges (5 and 6) have on the one hand an inner peripheral part respectively (7 and 8) surrounding said end constituted by a shoulder (3) and mounted permanently on the latter by a plurality of bolts (9), a reinforcing component (14) being interposed between the inner peripheral part and the bolts (9), this reinforcing component (14) being provided with an outer peripheral part (14a) that is housed in an orifice (15) made in the flywheel (4), and also an outer peripheral part (10) mounted permanently on the flywheel (4) by a plurality of bolts (11).

2. Device according to Claim 1, **characterised in that** a component (18) is interposed between the reinforcing component (14) and the bolts (9) and **in that** this component (18) is mounted permanently on the end of the crankshaft and is provided with contact areas (19) sliding over a bottom (4b) of a bore (A) in the flywheel (4).

3. Device for damping the travel of a power transmission assembly in order to transmit the engine torque to a driven unit comprising a crankshaft, an elastic torque transmission member having a central part fixed to one end (3) of the crankshaft (2) and a flywheel (4) having an outer peripheral part fixed to an outer peripheral part of the elastic member so that the engine torque is transmitted from the crankshaft to the flywheel through said transmission member, **characterised in that** a component (18) is interposed between a reinforcing component (14) mounted permanently at the end of the crankshaft thus enclosing the elastic transmission member (23) and the bolts (9) and **in that** this component (18) is mounted permanently on the end of the crankshaft and is provided with contact areas (19) sliding over a bottom (4b) of a bore (A) of the flywheel (4) made on the outer face (C) thereof corresponding to the clutch face.

4. Device according to Claim 2 or 3, **characterised in that** the component (18) has the general shape of a circle that is provided on its periphery with a plurality with notches (20) so as to provide a regular delimitation of the tabs (21) intended to be prestressed against the bottom (4b).

5. Device according to Claim 4, **characterised in that** each of the tabs (21) has an axial stiffness of the order of 25 to 250 N/mm.

6. Device according to Claim 4 or 5, **characterised in that** each of the tabs (21) is prestressed against the bottom (4b) of the bore (A) of the flywheel (4) with a force of the order of 25 to 250 N.
